# EUROPÄISCHE PATENTSCHRIFT

(11) **EP 2 405 987 B1**
(45) Veröffentlichungstag und Bekanntmachung des Hinweises auf die Patenterteilung: **18.06.2014**
(21) Anmeldenummer: 10700956.5
(22) Anmeldetag: 20.01.2010
(51) Int. Cl.: B01D 35/147

(54) **FILTERVORRICHTUNG, INSBESONDERE RÜCKLAUF-SAUGFILTER, SOWIE FILTERELEMENT FÜR DEN EINSATZ BEI EINER SOLCHEN FILTERVORRICHTUNG**
FILTER DEVICE, IN PARTICULAR RETURN LINE SUCTION FILTER, AND FILTER ELEMENT FOR USE IN SUCH A FILTER DEVICE
DISPOSITIF DE FILTRATION, EN PARTICULIER FILTRE SOUS ASPIRATION À REFLUX, ET ÉLÉMENT FILTRANT POUR UN TEL DISPOSITIF DE FILTRATION

(30) Priorität: 13.03.2009 DE 102009013070
(43) Veröffentlichungstag der Anmeldung: 18.01.2012
(73) Patentinhaber: Hydac Filtertechnik GmbH, 66280 Sulzbach/Saar (DE)
(72) Erfinder: SANN, Norbert, 66292 Riegelsberg (DE); EBERLE, Hans-Peter, 66280 Sulzbach (DE)
(74) Vertreter: Bartels, Martin Erich Arthur
(86) Internationale Anmeldenummer: PCT/EP2010/000321
(87) Internationale Veröffentlichungsnummer: WO 2010/102690

(56) Entgegenhaltungen:
- EP-A1- 1 281 426
- US-A1- 2005 161 386
- US-A1- 2006 054 547
- US-B1- 6 733 666

## Beschreibung

Die Erfindung betrifft eine Filtervorrichtung, insbesondere Rücklauf-Saugfilter, mit mindestens einem Filtergehäuse, gemäß der Merkmalsausgestaltung des Oberbegriffs des Patentanspruchs 1. Außerdem betrifft die Erfindung ein Filterelement für eine derartige Filtervorrichtung.

Filtervorrichtungen dieser Art sind in verschiedenen Bauformen im Handel frei erhältlich. In großem Umfang werden derartige Filtervorrichtungen zur Filtration von Arbeitsfluiden, wie Hydraulikflüssigkeiten, Kraftstoffen, Schmierstoffen und dergleichen, eingesetzt. Eine derartige Vorrichtung in Form eines Saugfilters ist beispielsweise in dem Prospekt D7.108.2/06.07 der Anmelderin mit der Produktbezeichnung Rücklauf-Saugfilter RKM beschrieben und in unterschiedlichen Druckstufen (bis 10bar) und für verschiedene Rücklaufvolumenströme (bis 800l/min) im Handel erhältlich.

Rücklauf-Saugfilter kommen in Hydrauliksystemen in solchen Fällen zum Einsatz, wo im System sowohl ein offener Hydraulikkreislauf (z.B. eine Arbeitshydraulik) als auch ein geschlossenes hydrostatisches System vorhanden sind (z.B. ein Fahrantrieb). Rücklauf-Saugfilter können hierbei sowohl die Funktion des Rücklauffilters des offenen Kreises als auch die Funktion des Saugfilters des geschlossenen Kreises (Antriebs) übernehmen, vorausgesetzt, dass der Rücklaufstrom des offenen Hydrauliksystems nicht kleiner ist als der Volumenstrom der Speisepumpe für das hydrostatische System.

Die EP 1 281 426 A1 beschreibt eine Filtervorrichtung mit einem Filtergehäuse, das eine Verdrehsicherung an einer Innenoberfläche aufweist, ein drehbar in dem Filtergehäuse angeordnetes Stützrohr, das Stützrohr hat eine Verdrehsicherungseinrichtung an seiner Außenumfangsfläche und wird an einem seiner Enden in dem Filtergehäuse gehalten. Ferner weist die Filtervorrichtung ein Filterelement auf, das eine erste Verdrehsicherungseinrichtung umfasst, die mit der Verdrehsicherungseinrichtung an der Innenoberfläche des Filtergehäuses in Wirkverbindung steht, um das Filterelement relativ zu dem Filtergehäuse verdrehgesichert zu halten. Die Filtervorrichtung umfasst ferner eine zweite Verdrehsicherungseinrichtung, die mit der Verdrehsicherungseinrichtung des Stützrohres zusammenwirkt, um das Stützrohr verdrehgesichert mit dem Filterelement zu verbinden.

Die US 2006/0054547 A1 beschreibt einen Kraftstoff-Filter und eine Endkappe allgemein für ein Filter mit einem Stützrohr, mit einer ersten Endkappe mit einer ersten kreisrunden Aufnahme zum Aufnehmen eines ersten Endes eines rohrförmigen Filterelements, wobei die Endkappe mit dem Ende des Filterelements dichtend verbunden ist, wobei die erste Endkappe eine erste, zentrale Öffnung aufweist. Eine zweite Endkappe des Kraftstoff-Filters weist eine äußere und innere Schürze auf, wobei ein scheibenförmiger Abschnitt dazwischen angeordnet ist. Die zweite Endkappe bildet eine zweite, kreisrunde Aufnahme für ein zweites Ende für das Filterelement, wobei die zweite Endkappe dichtend mit dem Filterelement verbunden ist und eine zweite, zentral angeordnete Öffnung aufweist.

Eine Vielzahl an Zähnen ist an dem scheibenförmigen Abschnitt angeordnet und ragt axial von dem Abschnitt und von dem Filterelement weg. Die Zähne sind kreisförmig um eine Längsachse des Kraftstoff-Filters angeordnet und dienen dazu, beim Einsetzen des Filterelements in ein Filtergehäuse ein Schnappschloss in axialer Richtung des Filters entgegen der Druckkraft einer Feder zu verschieben. Dadurch wird eine Fluidöffnung in dem Stützrohr freigegeben.

Bei Fluidsystemen, namentlich Hydrauliksystemen, bei denen Filtervorrichtungen zum Einsatz kommen, hängt die Betriebssicherheit des Systems in hohem Maße von der sicheren Funktion der im System befindlichen Filtervorrichtung ab. Mit anderen Worten gesagt, kann ein Versagen der Filtervorrichtung über den Ausfall des zugehörigen Systems hinaus zu einer schwerwiegenden Beschädigung des Systems führen und dadurch hohe wirtschaftliche Schäden verursachen.

Im Hinblick auf diese Problematik stellt sich die Erfindung die Aufgabe, eine Filtervorrichtung zur Verfügung zu stellen, die sich durch besondere Funktionssicherheit auszeichnet.

Erfindungsgemäß ist diese Aufgabe durch eine Filtervorrichtung gelöst, die die Merkmale des Patentanspruches 1 in seiner Gesamtheit aufweist.

Gemäß dem kennzeichnenden Teil des Anspruches 1 besteht eine wesentliche Besonderheit der Filtervorrichtung darin, dass die Endkappe aus einem zur Längsachse konzentrischen, inneren Hülsenkörper, der die innere Wand eines Anschlussstutzens mit den darin befindlichen Vertiefungen bildet und mit einem umfänglichen Ringkörper einstückig ist, der die Einfassung für einen Endrand des Filtermaterials bildet, sowie aus einer, den Hülsenkörper umgebenden Außenhülse aufgebaut ist, deren Außenseite eine Anlagefläche für ein Stützrohr des Filterelements bildet.

Eine solche zweiteilige Bauweise der Endkappe ist hinsichtlich der Fertigung aus pressgeformten Kunststoffteilen vorteilhaft. Zudem ist ausgeschlossen, dass ein für den jeweiligen Einsatzzweck ungeeignetes, also nicht einer entsprechenden Druckstufe zugeordnetes oder eine ungeeignete Filterfeinheit aufweisendes Filterelement zum Einsatz kommt, und dass auch die Gefahr vermieden ist, dass gegebenenfalls ein sogenanntes, auf dem Markt befindliches "Billigelement" zum Einsatz gebracht wird, das die geltenden Sicherheitsstandards nicht erfüllt.

Da für das Ermöglichen des gegenseitigen Eingriffes eine Lagebeziehung erforderlich ist, bei der die Gestaltsunregelmäßigkeiten eine zueinander ausgerichtete Lagebeziehung haben, ergibt sich der zusätzliche Vorteil, dass der Eingriff zwischen Elementaufnahme und Endkappe eine Verdrehsicherung bildet, so dass auch bei einer im Filtergehäuse auftretenden Tangentialströmung das Filterelement gegen ein mögliches Drehmoment um die Längsachse abgestützt ist.

Bei bevorzugten Ausführungsbeispielen besitzt das Filtergehäuse die Form eines Topfes, von dessen Oberseite her das Filterelement einsetzbar ist, das an der ein Gehäuse-Bodenteil bildenden Elementaufnahme festlegbar ist. Bei so gestalteten Filtergehäusen bildet üblicherweise ein Gehäusedeckel den oberen Abschluss des Gehäuses und eine Abstützung für die obere Endkappe des Filterelementes. Demgemäß kann der Gehäusedeckel mit dem oberen Ende des Filtergehäuses nur verschraubt oder daran angeschraubt werden, wenn das Filterelement mit der Elementaufnahme am Bodenteil des Gehäuses richtig in Eingriff gebracht ist. Ein Versuch, versehentlich ein "falsches" Filterelement einzubauen wird dem Bediener daher sofort augenfällig signalisiert.

Dabei kann die Anordnung vorzugsweise so getroffen sein, dass das die Elementaufnahme bildende Bodenteil einen von seiner Oberseite koaxial vorspringenden Rohrstutzen besitzt, der sich zur Bildung einer Fluidverbindung in den inneren Filterhohlraum des in der Funktionsposition befindlichen Filterelementes erstreckt, wobei der Rohrstutzen außenumfangsseitig die der Elementaufnahme zugehörigen Gestaltsunregelmäßigkeiten aufweist.

Für die Festlegung des Filterelementes an einer derart gestalteten Elementaufnahme kann die Endkappe einen koaxialen Anschlussstutzen aufweisen, der sich in den von einem fluiddurchlässigen Stützrohr umgebenen inneren Filterhohlraum des Filterelementes erstreckt und in den der Rohrstutzen der Elementaufnahme bei der Funktionsposition des Filterelementes eingreift. Die der Endkappe zugehörigen Gestaltsunregelmäßigkeiten befinden sich hierbei an der inneren Wand des Anschlusstutzens der Endkappe.

Bei besonders vorteilhaften Ausführungsbeispielen weisen die Gestaltsunregelmäßigkeiten am Rohrstutzen der Elementaufnahme zumindest eine radial vorstehende, in Längsrichtung verlaufende Rippe auf, der eine sich in Längsrichtung erstreckende Vertiefung in der inneren Wand des Anschlussstutzens der Endkappe zugeordnet ist.

Eine besonders hohe Verwechslungssicherheit ist gegeben, wenn mehrere um den Umfang des Rohrstutzens der Elementaufnahme verteilte Längsrippen und diesen zugeordnete Vertiefungen im Anschlussstutzen der Endkappe vorgesehen sind. je nach Verteilungsmuster der Anordnung der Rippen und Vertiefungen ist dadurch die ausschließliche Verwendbarkeit speziell angepaßter Filterelemente sichergestellt.

Wenn hierbei die Anordnung so getroffen ist, dass die Außenhülse einen Hohlzylinder bildet, dessen axiale Länge größer als diejenige des inneren Hülsenkörpers ist, so dass der innere Endrand der Außenhülse über den Endrand des Hülsenkörpers vorsteht, und dass der Endrand der Außenhülse ein radial nach innen eingezogenes Endteil bildet, dann kann dieses Endteil zusammen mit dem benachbarten Endrand des Hülsenkörpers einen ringnutartigen Raum begrenzen, der als Sitz für ein ringförmiges Dichtelement dient. Diese Ausbildung der Endkappe ermöglicht somit eine einwandfreie Abdichtung des inneren Filterhohlraumes am Gehäuse-Bodenteil und damit die Abdichtung des beim Filtervorgang die Reinseite bildenden inneren Filterhohlraumes gegenüber der an der Außenseite des Filterelementes befindlichen Schmutzseite.

Vorzugsweise bildet das die Elementaufnahme bildende Bodenteil an der vom Rohrstutzen abgewandten Unterseite ein einstückig angeformtes Gehäuseteil eines Ventilgehäuses, das einen mit der Tankseite eines Hydrauliksystem verbindbaren Ausgang besitzt. Dadurch lassen sich ein Bypassventil und Ventilanordnungen, wie sie beispielsweise bei Rücklauf- Saugfiltern zum Einsatz kommen, konstruktiv einfach in das Bodenteil integrieren.

Diesbezüglich können im Bodenteil ein erster Fluiddurchgang, der von der Schmutzseite des in der Funktionsposition befindlichen Filterelementes her unter Umgehung des Rohrstutzens zu einem im Ventilgehäuse befindlichen Bypassventil führt, sowie ein zweiter Fluiddurchgang vorgesehen sein, der vom Rohrstutzen zu zumindest einem weiteren, im Ventilgehäuse befindlichen Ventil, wie Nachsaugventil und/oder Vorspannventil, führt das, bzw. die mit dem Ausgang in Verbindung ist bzw. sind.

Gegenstand der Erfindung ist auch ein Filterelement für den Einsatz bei einer Filtervorrichtung nach einem der Ansprüche 1 bis 9, wobei das Filterelement die Merkmale des Patentanspruches 10 in seiner Gesamtheit aufweist.

Nachstehend ist die Erfindung anhand eines in der Zeichnung dargestellten Ausführungsbeispieles im Einzelnen erläutert. Es zeigen:
- Fig. 1: einen Längsschnitt eines Ausführungsbeispieles der erfindungsgemäßen Filtervorrichtung, wobei der Zustand dargestellt ist, bei dem versucht wird, ein nicht für die Benutzung geeignetes Filterelement im Filtergehäuse in die Funktionsposition zu bringen;
- Fig. 2: einen gegenüber Fig. 1 in geringfügig kleinerem Maßstab gezeichneter Längsschnitt, wobei der Zustand dargestellt ist, bei dem ein Filterelement sich in der Funktionsposition befindet;
- Fig. 3: einen gegenüber Fig. 2 in größerem Maßstab gezeichneten Teilausschnitt des in Fig. 2 mit III bezeichneten Bezirks;
- Fig. 4: eine perspektivische Schrägansicht lediglich des eine Elementaufnahme bildenden Gehäuse-Bodenteiles des Ausführungsbeispieles;
- Fig. 5: eine perspektivische Schrägansicht eines für den Einsatz bei der erfindungsgemäßen Vorrichtung vorgesehenen Filterelementes, gesehen auf dessen mit der Elementaufnahme zusammenwirkende Endkappe;
- Fig. 6: eine gegenüber Fig. 5 in größerem Maßstab gezeichnete Teilansicht lediglich des in Fig. 5 mit VI bezeichneten Bezirks und
- Fig. 7a bis 7c: Längsschnitte lediglich der Teile der mit der Elementaufnahme zusammenwirkenden Endkappe des Filterelementes von Fig. 5 und 6, wobei Fig. 7c die Endkappe in zusammengesetztem Zustand zeigt.

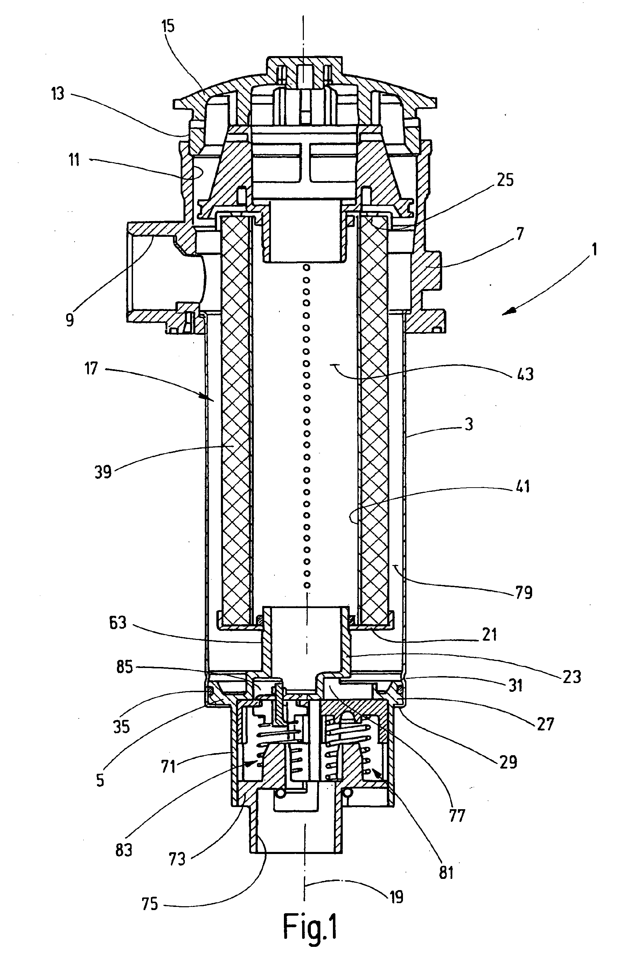

Ein als Ganzes mit 1 bezeichnetes Filtergehäuse weist einen hohlzylinderförmigen Hauptteil 3 auf, der an seinem bodenseitigen Ende durch ein Gehäuse-Bodenteil 5 abgeschlossen ist. An das obere Ende des Hauptteiles 3 schließt sich ein Gehäuseoberteil 7 an, das in der bei derartigen Filtergehäusen üblichen Art und Weise Fluidführungen aufweist, von denen in der Zeichnung ein Fluideinlass 9 sichtbar ist, über den abzureinigendes Fluid zu dem beim Filtervorgang die Schmutzseite bildenden Raum im Filtergehäuse 1 zuführbar ist. Eine im Oberteil 7 vorgesehene weitere Fluidführung, die mit dem beim Filtervorgang die Reinseite bildenden Raum in Verbindung ist, führt zu einem Auslass für den Austritt abgereinigten Fluides aus dem Gehäuseoberteil 7, wobei dieser Auslass in der Zeichnung, da er gegenüber der Zeichnungsebene um 90 Grad verdreht ist, nicht sichtbar ist. Am oberen Ende des Gehäuseoberteiles 7 befindet sich ein Innengewinde 11, mit dem das Außengewinde 13 eines Gehäusedeckels 15 verschraubbar ist. Die Fig. 1 zeigt, dass der Gehäusedeckel 15 sich in einer vom Oberteil 7 abgehobenen Lage befindet, bei der der Gewindeeingriff von Innengewinde 11 und Außengewinde 13 nicht zustande gekommen ist.

Im Filtergehäuse 1 ist ein Filterelement 17 in Form einer Filterpatrone aufnehmbar, die bei abgenommenem Gehäusedeckel 15 vom offenen Ende des Gehäuseoberteiles 7 her entlang der Längsachse 19 in das Filtergehäuse 1 einsetzbar ist. Für die Festlegung des Filterelementes 17 in seiner Funktionsposition bildet das Bodenteil 5 eine Elementaufnahme, die mit der bodenseitigen Endkappe 21 des Filterelementes 17 zusammenwirkt. Als Hauptteil der Elementaufnahme weist das Bodenteil 5 einen zur Achse 19 konzentrischen, vom Bodenteil 5 weg in Richtung auf das Gehäuseoberteil 7 axial vorspringenden Rohrstutzen 23 auf. Die Fig. 1 zeigt einen Zustand, bei dem das Filterelement 17 mit seiner Endkappe 21 nicht ausreichend weit auf den Rohrstutzen 23 aufgeschoben werden kann, sondern aufgrund der Formgestaltung des Rohrstutzens 23 in der in Fig. 1 gezeigten Stellung blockiert ist. Bei dieser Position des Filterelementes 17 ist das Gehäuseoberteil 7 durch den Gehäusedeckel 5 nicht schließbar, weil der an der deckelseitigen Endkappe 25 des Filterelementes 17 anliegende Gehäusedeckel 15 vom Gehäuseoberteil 7 in einem Abstand gehalten ist, bei dem kein Gewindeeingriff von Innengewinde 11 und Außengewinde 13 möglich ist.

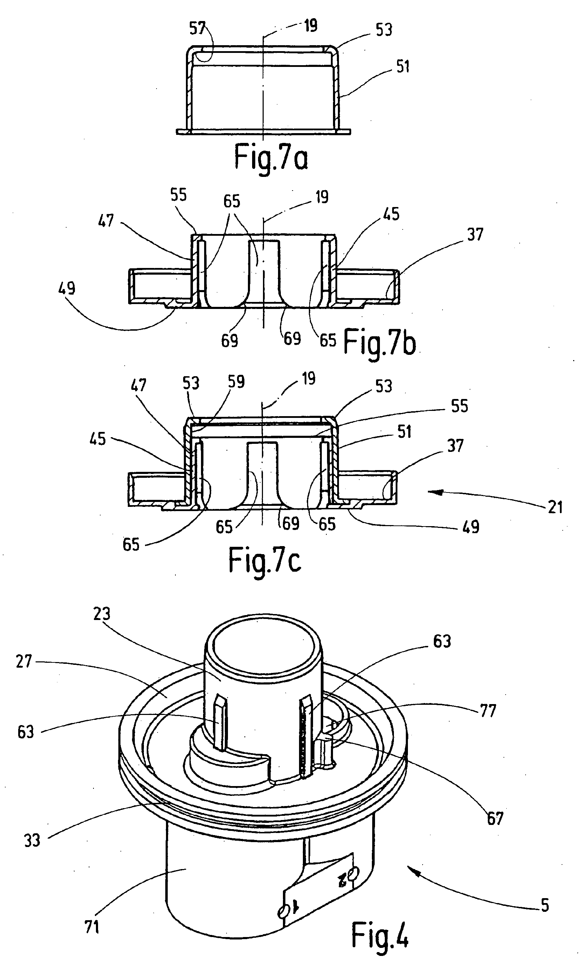

Die Fig. 4 zeigt Einzelheiten der Formgebung des Bodenteiles 5. Dieses ist mit seinem kreisringförmigen Umfangsrand in Form eines Ringkörpers 27 mit dem unteren Ende des Gehäusehauptteiles 3 verbunden, und zwar in der Weise, dass das untere Ende 29 des durch ein Stahlrohr gebildeten Hauptteiles 3 den Ringkörper 27 umgreift und an der Oberkante des Ringkörpers 27 eine Bördelstelle 31 gebildet ist. In dem Außenumfang des Ringkörpers 27 befindet sich eine Ringnut 33 für einen Dichtring 35 zur Abdichtung zwischen Bodenteil 5 und-Gehäusehauptteil 3.

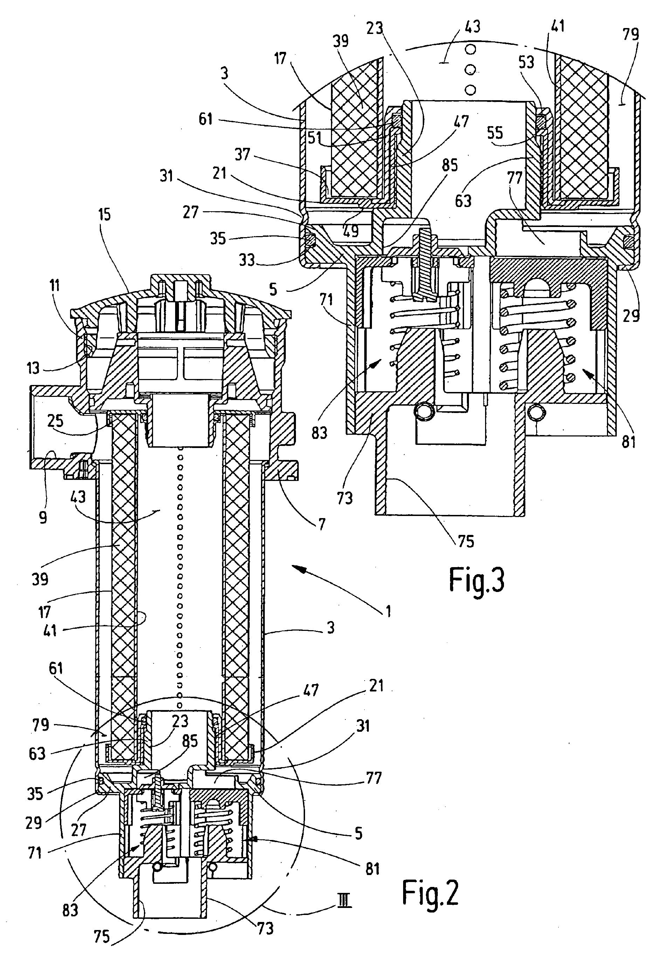

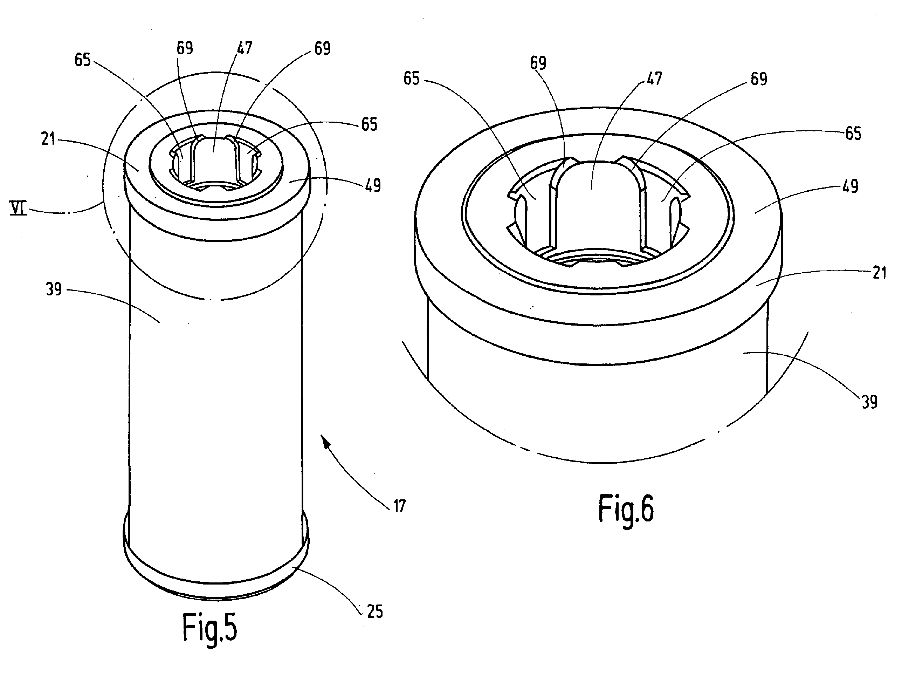

Die Fig. 2 bis 7 verdeutlichen nähere Einzelheiten der Gestaltung sowohl des Bodenteiles 5 als auch der zugeordneten Endkappe 21 des für den Einsatz bei der Filtervorrichtung geeigneten Filterelementes 17. Wie aus Fig. 5 bis 7 ersichtlich ist, bildet die Endkappe 21 einen Ringraum 37 als Einfassung für einen Endrand des ein Stützrohr 41 umgebenden Filtermaterials 39 des Filterelementes 17. Das Stützrohr 41 begrenzt den inneren Filterhohlraum, der im Filterelement 17 die Reinseite beim Filtervorgang bildet. Wie Fig. 7a bis 7c zeigen, ist die Endkappe 21 zweiteilig aufgebaut, nämlich aus einem zur Achse 19 konzentrischen, inneren Hülsenkörper 45, welcher an seiner Innenseite die innere Wand eines konzentrischen Anschlusstutzens 47 bildet, der vom Boden 49 des Ringraumes 37 weg axial vorspringt, und zwar in den inneren Filterhohlraum 43 hinein. Die Endkappe 21 ist durch eine in Fig. 7a gesondert gezeigte Außenhülse 51 vervollständigt, die über die Außenseite des Anschlusstutzens 47 aufgesteckt und, wie Fig. 2 und 3 zeigen, außenseitig in Anlage mit dem Stützrohr 41 ist. Wie Fig. 7c zeigt, ist die axiale Länge der Außenhülse 51 größer als diejenige des Rohrstutzens 47, so dass der innere Endrand 53 der Außenhülse 51 im zusammengesetzten Zustand von Fig. 7c über den Endrand 55 am Anschlusstutzen 47 vorsteht. Mit einem radial nach innen eingezogenen Endteil 57 bildet daher der Endrand 53 einen Sitz 59 (Fig. 7c) für einen Dichtring 61, siehe Fig. 3 und 2.

Wie am besten aus Fig. 4 zu ersehen ist, sind am Außenumfang des den Hauptteil der Elementaufnahme des Bodenteiles 5 bildenden Rohrstutzens 23 radial vorspringende Längsrippen 63 angeformt, von denen beim vorliegenden Beispiel vier in gleichen Winkelabständen angeordnet sind und von denen in Fig. 4 zwei sichtbar sind. Um den Eingriff zwischen dem Anschlusstutzen 47 der Endkappe 21 und dem Rohrstutzen 23 zu ermöglichen weist die Innenwand des Anschlusstutzens 47 als zu den Längsrippen 63 komplementäre Gestaltsunregelmäßigkeiten Vertiefungen 65 in der Innenwand des Anschlusstutzens 47 auf. Diese Vertiefungen 65 ermöglichen es in komplementärer Anordnung zu den Längsrippen 63 des Rohrstutzens 23, dass das Filterelement 17 mit seiner Endkappe 21 auf den Rohrstutzen 23 aufschiebbar ist, bis der Boden 49 der Endkappe 21 auf Abstandhaltern 67 (Fig. 4) der Elementaufnahme zur Anlage kommt und das Filterelement 17 in seiner Funktionsposition ist. Dabei ist, wie in Fig. 3 am besten ersichtlich ist, der innere Filterhohlraum 43 (Reinseite) durch den Dichtring 61 gegenüber der Elementaufnahme am Rohrstutzen 23 abgedichtet.

Die Vertiefungen 65, siehe Fig. 5, 6 sowie 7b und 7c, besitzen in Umfangsrichtung eine größere Breite als die Längsrippen 63 am Rohrstutzen 23 der Elementaufnahme, so dass das Zusammenfahren der Längsrippen 63 und der Vertiefungen 65 beim Verbringen des Filterelements 17 in die Funktionsposition ohne Schwierigkeiten erfolgen kann und auch das Herausnehmen des Filterelementes 17 beim Elementwechsel hemmungsfrei erfolgen kann. So kann der insoweit erzeugte radiale Verfahrweg dazu genutzt werden, zum Lösen einer eventuell festgesetzten Dichtung zu dienen, in dem die Dichtung zumindest ein Stück dieses Verfahrweges mitgenommen wird. Das Zusammenfahren wird außerdem dadurch erleichtert, dass die Vertiefungen 65 am offenen Ende, d.h. am Boden 49 der Endkappe 21, jeweils eine bogenförmige Erweiterung 69 aufweisen.

Es versteht sich, dass anstelle der durch Längsrippen 63 und Vertiefungen 65 gebildeten, komplementären Gestaltsunregelmäßigkeiten an Elementaufnahme (Rohrstutzen 23) und Endkappe 21 anders geformte Ausgestaltungen in beliebiger Musteranordnung vorgesehen sein könnten. Ebenso könnte die Zuordnung radial vorspringender und radial vertiefter Elemente umgekehrt als beim vorliegenden Beispiel gewählt sein, so dass beispielsweise Längsrippen an der Endkappe 21 und Vertiefungen am Rohrstutzen 23 der Elementaufnahme vorgesehen sein könnten.

Die Fig. 1 bis 4 zeigen, dass das die Elementaufnahme bildende Bodenteil 5 an seiner vom Rohrstutzen 23 abgewandten Unterseite ein einstückig angeformtes Gehäuseteil 71 aufweist, das zusammen mit einem einen unteren Gehäuseabschluss bildenden Ausgangsteil 73 ein Ventilgehäuse bildet. Das Ausgangsteil 73 seinerseits bildet einen Ausgang 75, der mit der Tankseite eines zugeordneten, nicht gezeigten Hydrauliksystem verbindbar ist. Ein im Bodenteil 5 befindlicher Fluiddurchgang 77 verbindet den beim Filtervorgang die Schmutzseite bildenden Raum 79 des in der Funktionsposition befindlichen Filterelementes 17 mit einem Bypassventil 81 im Ventilgehäuse 71, 73, das bei Druckbetätigung den Druckabbau vom Fluiddurchgang 77 her zum tankseitigen Ausgang 75 hin ermöglicht. Bei der Benutzung des hier beschriebenen Ausführungsbeispieles der Filtervorrichtung als Rücklauf-Saugfilter befindet sich innerhalb des Ventilgehäuses 71, 73 und in Fluidverbindung mit dem Ausgang 75 eine weitere Ventilanordnung 83 in Form eines kombinierten Nachsaug- und Vorspannventils, das zwischen einen zweiten Fluiddurchgang 85 im Bodenteil 5, der mit dem die Reinseite bildenden inneren Filterhohlraum 43 in Verbindung ist, und dem tankseitigen Ausgang 75 eingefügt ist.

## Patentansprüche

1. Filtervorrichtung, insbesondere Rücklauf-Saugfilter, mit mindestens einem Filtergehäuse (1), in dem mindestens ein eine Längsachse (19) definierendes Filterelement (17) in Form einer Filterpatrone aufgenommen ist, die an zumindest einem Ende eine eine Einfassung für den betreffenden Endrand des Filtermaterials (39) bildende Endkappe (21) aufweist, die zur Lagefixierung des Filterelementes (17) in seiner Funktionsposition an einer mit dem Filtergehäuse (1) verbundenen Elementaufnahme (5) festgelegt ist, wobei die Elementaufnahme (5) und die zugehörige Endkappe (21) des Filterelementes (17) an ihren bei der Funktionsposition des Filterelements (17) miteinander in Eingriff kommenden Teilen (23, 47) mit aneinander angepassten Gestaltsunregelmäßigkeiten (63, 65) in Form von Rippen (63) und Vertiefungen (65) versehen sind, die in aufeinander ausgerichteter Lagebeziehung den Eingriff ermöglichen, **dadurch gekennzeichnet, dass** die Endkappe (21) aus einem zur Längsachse (19) konzentrischen, inneren Hülsenkörper (45), der die innere Wand eines Anschlussstutzens (47) mit den darin befindlichen Vertiefungen (65) bildet und mit einem umfänglichen Ringkörper einstückig ist, der die Einfassung (37) für einen Endrand des Filtermaterials (39) bildet, sowie aus einer, den Hülsenkörper (45) umgebenden Außenhülse (51) aufgebaut ist, deren Außenseite eine Anlagefläche für ein Stützrohr (41) des Filterelements (17) bildet.

2. Filtervorrichtung nach Anspruch 1, **dadurch gekennzeichnet, dass** das Filtergehäuse (1) die Form eines Topfes besitzt, von dessen Oberseite her das Filterelement (17) einsetzbar ist, das an der ein Gehäuse-Bodenteil (5) bildenden Elementaufnahme festlegbar ist.

3. Filtervorrichtung nach Anspruch 2, **dadurch gekennzeichnet, dass** das die Elementaufnahme bildende Bodenteil (5) einen von seiner Oberseite koaxial vorspringenden Rohrstutzen (23) besitzt, der sich zur Bildung einer Fluidverbindung in den inneren Filterhohlraum (43) des in der Funktionsposition befindlichen Filterelementes (17) erstreckt, und dass der Rohrstutzen (23) außenumfangsseitig die der Elementaufnahme zugehörigen Gestaltsunregelmäßigkeiten (63) aufweist.

4. Filtervorrichtung nach Anspruch 3, **dadurch gekennzeichnet, dass** die Endkappe (21) einen koaxialen Anschlussstutzen (47) aufweist, der sich in den von einem fluiddurchlässigen Stützrohr (41) umgebenen inneren Filterhohlraum (43) des Filterelements (17) erstreckt und in den der Rohrstutzen (23) der Elementaufnahme (5) bei der Funktionsposition des Filterelements (17) eingreift, und dass der Anschlussstutzen (47) an seiner inneren Wand die der Endkappe (21) zugehörigen Gestaltungsunregelmäßigkeiten (65) aufweist.

5. Filtervorrichtung nach Anspruch 4, **dadurch gekennzeichnet, dass** die Gestaltsunregelmäßigkeiten am Rohrstutzen (23) der Elementaufnahme (5) zumindest eine radial vorstehende, in Längsrichtung verlaufende Rippe (63) aufweisen, der eine sich in Längsrichtung erstreckende Vertiefung (65) in der inneren Wand des Anschlusstutzens (47) der Endkappe (21) zugeordnet ist.

6. Filtervorrichtung nach Anspruch 5, **dadurch gekennzeichnet, dass** mehrere um den Umfang des Rohrstutzens (23) der Elementaufnahme (5) verteilte Längsrippen (63) und diesen zugeordnete Vertiefungen (65) im Anschlusstutzen (47) der Endkappe (21) vorgesehen sind.

7. Filtervorrichtung nach einem der vorhergehenden Ansprüche, **dadurch gekennzeichnet, dass** die Außenhülse (51) einen Hohlzylinder bildet, dessen axiale Länge größer als diejenige des inneren Hülsenkörpers (45) ist, so dass der innere Endrand (53) der Außenhülse (51) über den Endrand (55) des Hülsenkörpers (45) vorsteht, und dass der Endrand (53) der Außenhülse (51) ein radial nach innen eingezogenes Endteil (57) bildet, das zusammen mit dem benachbarten Endrand (55) des Hülsenkörpers (45) einen ringnutartigen Raum (59) als Sitz für ein ringförmiges Dichtelement (61) begrenzt.

8. Filtervorrichtung nach einem der Ansprüche 3 bis 7, **dadurch gekennzeichnet, dass** das die Elementaufnahme bildende Bodenteil (5) an der vom Rohrstutzen (23) abgewandten Unterseite ein einstückig angeformtes Gehäuseteil (71) eines Ventilgehäuses (71, 73) bildet, das einen mit der Tankseite eines Hydrauliksystems verbindbaren Ausgang (75) besitzt.

9. Filtervorrichtung nach Anspruch 8, **dadurch gekennzeichnet, dass** im Bodenteil (5) ein erster Fluiddurchgang (77), der von der Schmutzseite (79) des in der Funktionsposition befindlichen Filterelementes (17) her unter Umgehung des Rohrstutzens (23) zu einem im Ventilgehäuse (71, 73) befindlichen Bypassventil (81) führt, sowie ein zweiter Fluiddurchgang (85) vorgesehen sind, der vom Rohrstutzen (23) zu zumindest einem weiteren, im Ventilgehäuse (71, 73) befindlichen Ventil (83), wie Nachsaugventil und/oder Vorspannventil, führt, das bzw. die mit dem Ausgang (75) in Verbindung ist bzw. sind.

10. Filterelement für den Einsatz bei einer Filtervorrichtung nach einem der Ansprüche 1 bis 9, das an zumindest einem Ende eine eine Einfassung für einen betreffenden Endrand des Filtermaterials (39) bildende Endkappe (21) aufweist, die zur Lagefixierung des Filterelementes (17) in einer Funktionsposition an einer in einem Filtergehäuse (1) befindlichen Elementaufnahme (5) festlegbar ist, wobei die Endkappe (21) an Teilen (47), die bei der Funktionsposition mit Teilen (23) der Elementaufnahme (5) im betreffenden Filtergehäuse (1) in Eingriff kommen, mit Gestaltsunregelmäßigkeiten (65) versehen ist, die an Gestaltsunregelmäßigkeiten (63), die sich an Teilen (23) der Elementaufnahme (5) befinden, derart angepaßt sind, dass bei aufeinander ausgerichteter Lagebeziehung der Gestaltsunregelmäßigkeiten (63, 65) der Eingriff zwischen Endkappe (21) und Elementaufnahme (5) und damit das Verbringen des Filterelementes (17) in die Funktionsposition ermöglicht sind, **dadurch gekennzeichnet, dass** die Endkappe (21) aus einem zur Längsachse (16) konzentrischen, inneren Hülsenkörper (45), der die innere Wand eines Anschlussstutzens (47) mit den darin befindlichen Vertiefungen (65) bildet und mit einem umfänglichen Ringkörper einstückig ist, der die Einfassung (37) für einen Endrand des Filtermaterials (39) bildet, sowie aus einer, den Hülsenkörper (45) umgebenden Außenhülse (51) aufgebaut ist, deren Außenseite eine Anlagefläche für ein Stützrohr (41) des Filterelements (17) bildet.

## Claims

1. A filter device, in particular a return line suction filter, having at least one filter housing (1) in which at least one filter element (17) which defines a longitudinal axis (19) in the form of a filter cartridge can be accommodated, which cartridge on at least one end has an end cap (21) which forms an enclosure for the respective end edge of the filter material (39) and which is fixed onto an element receptacle (5) which is connected to the filter housing (1) in order to fix the filter element (17) in its operating position, the element receptacle (5) and the corresponding end cap (21) of the filter element (17) on their parts (23, 47) which engage with one another in the operating position of the filter element (17) being provided with design irregularities (63, 65) in the form of ribs (63) and depressions (65) which are matched to one another and which enable engagement in a positional relationship aligned to one another, **characterised in that** the end cap (21) is composed of an inner sleeve body (45) which is concentric to the longitudinal axis (19) and which forms the inner wall of a connector (47) with the depressions (65) located in it and which is integral with a peripheral annular member which forms the enclosure (37) for an end edge of the filter material (39) and of an outer sleeve (51) which surrounds the sleeve body (45) and the outside of which forms a contact surface for a support pipe (41) of the filter element (17).

2. The filter device according to Claim 1, **characterised in that** the filter housing (1) is in the shape of a cup, from the top of which the filter element (17) can be inserted and which can be fixed to the element receptacle forming a housing bottom part (5).

3. The filter device according to Claim 2, **characterised in that** the bottom part (5) which forms the element receptacle has a pipe socket (23) which projects coaxially from its top and which extends into the inner filter cavity (43) of the filter element (17) located in the operating position to form a fluid connection, and that on the outer peripheral side the pipe socket (23) has the design irregularities (63) corresponding to the element receptacle.

4. The filter device according to Claim 3, **characterised in that** the end cap (21) has a coaxial connector (47) which extends into the inner filter cavity (43) of the filter element (17) surrounded by a fluid-permeable support pipe (41) and in which the pipe socket (23) of the element receptacle (5) engages in the operating position of the filter element (17) and that on its inner wall the connector (47) has the design irregularities (65) corresponding to the end cap (21).

5. The filter device according to Claim 4, **characterised in that** the design irregularities on the pipe socket (23) of the element receptacle (5) have at least one radially projecting rib (63) which runs in the longitudinal direction and to which is assigned a depression (65) which extends in the longitudinal direction in the inner wall of the connector (47) of the end cap (21).

6. The filter device according to Claim 5, **characterised in that** there are several longitudinal ribs (63) which are distributed around the periphery of the pipe socket (23) of the element receptacle (5) and several depressions (65) assigned to the ribs in the connector (47) of the end cap (21).

7. The filter device according to any of the preceding claims, **characterised in that** the outer sleeve (51) forms a hollow cylinder the axial length of which is greater than that of the inner sleeve body (45) so that the inner end edge (53) of the outer sleeve (51) projects over the end edge (55) of the sleeve body (45) and that the end edge (53) of the outer sleeve (51) forms an end part (57) which is drawn radially to the inside, and this end part together with the adjacent end edge (55) of the sleeve body (45) borders an annular groove-like space (59) as a seat for an annular sealing element (61).

8. The filter device according to any of Claims 3 to 7, **characterised in that** the bottom part (5) which forms the element receptacle on the bottom which faces away from the pipe socket (23) forms a part (71) of a valve housing (71, 73) which is integrally moulded on and which has an outlet (75) which can be connected to the tank side of a hydraulic system.

9. The filter device according to Claim 8, **characterised in that** in the bottom part (5) there is a first fluid passage (77) which leads to a bypass valve (81) located in the valve housing (71, 73) from the dirty side (79) of the filter element (17) which is in the operating position, bypassing the pipe socket (23), and there is a second fluid passage (85) which leads from the pipe socket (23) to at least one other valve (83) located in the valve housing (71, 73), such as an anti-cavitation valve and/or pre-loading valve, which valve or valves is or are connected to the outlet (75).

10. A filter element for use in a filter device according to any of Claims 1 to 9, which on at least one end has an end cap (21) which forms an enclosure for a respective end edge of the filter material (39) and which can be fixed onto an element receptacle (5) which is located in a filter housing (1) in order to fix the filter element (17) in an operating position, the end cap (21) on parts (47) which engage with parts (23) of the element receptacle (5) in the respective filter housing (1) in the operating position being provided with design irregularities (65) which are matched to design irregularities (63) on parts (23) of the element receptacle (5) such that for a positional relationship of the design regularities (63, 65) which are aligned to one another, the engagement between the end cap (21) and the element receptacle (5) and so the moving of the filter element (17) into the operating position are enabled, **characterised in that** the end cap (21) is composed of an inner sleeve body (45) which is concentric to the longitudinal axis (16) and which forms the inner wall of a connector (47) with the depressions (65) located in it and which is integral with a peripheral annular member which forms the enclosure (37) for an end edge of the filter material (39) and of an outer sleeve (51) which surrounds the sleeve body (45) and the outside of which forms a contact surface for a support pipe (41) of the filter element (17).

## Revendications

1. Dispositif de filtration, notamment filtre sous aspiration à reflux, comprenant au moins un corps (1) de filtre, dans lequel est logé un élément (17) filtrant, qui définit au moins un axe (19) longitudinal et qui est sous la forme d'une cartouche de filtre, qui a, à au moins une extrémité, une coiffe (21) d'extrémité, qui forme une bordure pour le bord d'extrémité concerné de la matière (39) filtrant et qui, pour l'immobilisation en position de l'élément (17) filtrant, dans sa position de fonctionnement, est fixé à un logement (5) d'élément relié au corps (1) du filtre, le logement (5) d'élément et la coiffe (21) d'extrémité associée de l'élément (17) filtrant étant, sur leurs parties (23, 47) venant en prise entre elles dans la position de fonctionnement de l'élément (17) filtrant, munis d'irrégularités (63, 65) de conformation adaptées entre elles, sous la forme de nervures (63) et de cavités (65), qui rendent possible la pénétration dans une relation de position orientée les unes par rapport aux autres, **caractérisé en ce que** la coiffe (21) d'extrémité est formée d'une douille (45) intérieure, concentrique à l'axe (19) longitudinal, qui forme la paroi intérieure d'une tubulure (47) de raccordement ayant les cavités (65) qui s'y trouvent et d'une seule pièce avec un corps annulaire périphérique qui forme la bordure (37) d'un bord d'extrémité de la matière (39) filtrante, ainsi que d'une douille (51) extérieure qui entoure la douille (45) intérieure et dont la face extérieure forme une surface d'application d'un tube (41) d'appui de l'élément (17) filtrant.

2. Dispositif de filtration suivant la revendication 1, **caractérisé en ce que** le corps (1) du filtre a la forme d'un pot, à partir de l'extrémité supérieure duquel peut être inséré l'élément (17) filtrant, qui peut être fixé au logement d'élément formant une partie (5) de fond du corps.

3. Dispositif de filtration suivant la revendication 2, **caractérisé en ce que** la partie (5) de fond formant le logement d'élément a une tubulure (23), qui fait saillie coaxialement de son côté supérieur et qui, pour la formation d'une liaison fluidique, s'étend dans l'espace (43) creux intérieur de filtre de l'élément (17) filtrant se trouvant dans la position de fonctionnement, et **en ce que** la tubulure (23) a, du côté du pourtour extérieur, les irrégularités (63) de conformation associées au logement d'élément.

4. Dispositif de filtration suivant la revendication 3, **caractérisé en ce que** la coiffe (21) d'extrémité a une tubulure (47) coaxiale de raccordement, qui s'étend dans l'espace (43) creux intérieur de filtre de l'élément (17) filtrant et entouré par un tube (41) d'appui perméable aux fluides et pénètre, en la position de fonctionnement de l'élément (17) filtrant, dans la tubulure (23) du logement (5) d'élément, et **en ce que** la tubulure (47) de raccordement a, sur sa paroi intérieure, les irrégularités (65) de conformation associées à la coiffe (21) d'extrémité.

5. Dispositif de filtration suivant la revendication 4, **caractérisé en ce que** les irrégularités (63) de conformation ont, sur la tubulure (23) du logement (5) d'élément, au moins une nervure (65) en saillie radialement et s'étendant dans la direction longitudinale, qui est associée à une cavité s'étendant dans la direction longitudinale et ménagée dans la paroi intérieure de la tubulure (47) de raccordement de la coiffe (21) d'extrémité.

6. Dispositif de filtration suivant la revendication 5, **caractérisé en ce qu'**il est prévu plusieurs nervures (63) longitudinales, réparties autour du pourtour de la tubulure (23) du logement (5) d'élément, et des cavités (65) qui leur sont associées dans la tubulure (47) de raccordement de la coiffe (21) d'extrémité.

7. Dispositif de filtration suivant l'une des revendications précédentes, **caractérisé en ce que** la douille (51) extérieure forme un cylindre creux, dont la longueur axiale est plus grande que celle de la douille (45) intérieure, de sorte que le bord (53) d'extrémité intérieure de la douille (51) extérieure dépasse du bord (55) d'extrémité de la douille (45), et **en ce que** le bord (53) d'extrémité de la douille (51) extérieure forme une partie (57) d'extrémité rentrée radialement vers l'intérieur, qui, ensemble avec le bord (55) d'extrémité voisin de la douille (45), forment un espace (59) de type en rainure annulaire servant de siège à un élément (61) d'étanchéité annulaire.

8. Dispositif de filtration suivant l'une des revendications 3 à 7, **caractérisé en ce que** la partie (5) de fond formant le logement d'élément forme, sur le côté inférieur éloigné de la tubulure (23), une partie (71) formée d'une pièce, d'un corps (71, 73) de vanne, qui a une sortie (75) pouvant communiquer avec le côté cuve d'un système hydraulique.

9. Dispositif de filtration suivant la revendication 8, **caractérisé en ce que**, dans la partie (5) de fond, sont prévus un premier passage (77) de fluide, qui va, du côté (79) sale de l'élément (17) filtrant se trouvant en la position de fonctionnement, en contournant la tubulure (23), à une vanne (81) de dérivation se trouvant dans le corps (71, 73) de vanne, ainsi qu'un deuxième passage (85) de fluide, qui va de la tubulure (23) à au moins une autre vanne (83) se trouvant dans le corps (71, 73) de vanne, comme une vanne d'aspiration et/ou une vanne d'asservissement, qui est ou sont en liaison avec la sortie (75).

10. Elément de filtre à utiliser dans un dispositif de filtration suivant l'une des revendications 1 à 9, qui a, à au moins une extrémité, une coiffe (21), qui forme une bordure pour un bord d'extrémité concerné de la matière (39) filtrante, et qui, pour l'immobilisation en position de l'élément (17) de filtre, dans une position de fonctionnement, peut être fixée à un logement (5) d'élément se trouvant dans un corps (1) de filtre, la coiffe (21) d'extrémité étant, à des parties (47) qui viennent, lors de la position de fonctionnement, en prise avec des parties (23) du logement (5) d'élément dans le corps (1) de filtre concerné, munie d'irrégularités (65) de conformation, qui sont adaptées à des irrégularités (63) de conformation qui se trouvent sur les parties (23) du logement (5) d'élément, de manière à ce que, pour une relation de position dirigée les unes sur les autres des irrégularités (63, 65) de conformation, la pénétration entre la coiffe (21) d'extrémité et le logement (5) d'élément et ainsi la mise de l'élément (17) de filtre dans la position de fonctionnement soient possibles, **caractérisé en ce que** la coiffe (21) d'extrémité est formée d'une douille (45) intérieure, concentrique à l'axe (16) longitudinal, qui forme la paroi intérieure d'une tubulure (47) de raccordement ayant les cavités (65) qui s'y trouvent et d'une seule pièce avec un corps annulaire périphérique qui forme la bordure (37) d'un bord d'extrémité de la matière (39) filtrante, ainsi que d'une douille (51) extérieure qui entoure la douille (45) intérieure et dont la face extérieure forme une surface d'application d'un tube (41) d'appui de l'élément (17) filtrant.
